# EUROPÄISCHE PATENTSCHRIFT

(11) **EP 3 049 681 B1**
(45) Veröffentlichungstag und Bekanntmachung des Hinweises auf die Patenterteilung: **25.03.2020**
(21) Anmeldenummer: 14753251.9
(22) Anmeldetag: 20.08.2014
(51) Int. Cl.: F16B 37/04, F16B 33/00

(54) **CLIPMUTTER**
CLIP NUT
ÉCROU CLIPS

(30) Priorität: 25.09.2013 DE 102013016015; 28.11.2013 DE 102013018113
(43) Veröffentlichungstag der Anmeldung: 03.08.2016
(73) Patentinhaber: SFS Intec Holding AG, 9435 Heerbrugg (CH)
(72) Erfinder: COSTABEL, Sascha, 71083 Herrenberg (DE); KLOSE, Thomas, 75382 Althengstett (DE)
(86) Internationale Anmeldenummer: PCT/EP2014/067706
(87) Internationale Veröffentlichungsnummer: WO 2015/043839

(56) Entgegenhaltungen:
- EP-A2- 1 903 219
- DE-A1- 10 241 656
- DE-A1-102009 019 205
- DE-C1- 10 207 253
- DE-T2- 69 620 475
- US-A- 4 074 491

## Beschreibung

Die Erfindung betrifft eine Clipmutter mit einem Clip, der eine erste Halteeinrichtung, eine zweite Halteeinrichtung und eine Verbindungseinrichtung, die die erste Halteeinrichtung mit der zweiten Halteeinrichtung verbindet, aufweist, wobei der Abstand der Halteeinrichtungen zueinander variabel ist, wobei die Erstreckung der ersten Halteeinrichtung und der zweiten Halteeinrichtung im Wesentlichen eine x-Achse definieren und die Erstreckung der Verbindungseinrichtung im Wesentlichen eine z-Achse definiert und wobei eine y-Achse senkrecht auf der x- und der z-Achse steht, und einer Mutter, die an der zweiten Halteeinrichtung so angeordnet ist, dass eine Achse der Mutter parallel zur z-Achse und/oder senkrecht zur x-Achse ausrichtbar ist, wobei die Achse der Mutter aus ihrer Lage parallel zur z-Achse und/oder senkrecht zur x-Achse um die y-Achse in einer xz-Ebene unter Aufgabe ihrer Parallelität zur z-Achse und/oder ihrer senkrechten Lage zur x-Achse verschwenkbar ist.

Derartige Clipmuttern kommen insbesondere dafür zum Einsatz, zwei Bauteile, beispielsweise Bleche, miteinander zu verbinden. Die Clipmutter wird zu diesem Zweck auf eines der Bleche in der Weise aufgeschnappt, dass eine Schraube durch das Loch in dem Blech hindurch in das Gewinde der Mutter einschraubbar ist. Mit einer solchen Schraube können beliebige andere Bauteile an das die Clipmutter tragende Bauteil angebracht werden, beispielsweise weitere Bleche oder auch Kontaktlaschen von Kabeln, etwa Erdungskabeln.

In der EP 1 305 142 B1 wird eine Clipmutter beschrieben. Das Bauteil, welches die Clipmutter trägt wird dabei von zwei Haltereinrichtungen eines elastischen Clips eingeklemmt, während die Mutter an einem Halteelement angeordnet ist, nämlich an der dem Bauteil abgewandten Seite des Haltelementes.

Die DE 10 2011 084 900 A1 beschreibt eine Clipmutter, die zum Befestigen einer Kontaktlasche an einem Bauteil dient. Auch hier sind zwei Haltelemente vorgesehene, die das Bauteil direkt kontaktieren, während die Mutter an der Außenseite eines der Haltelemente ohne Kontakt zum Bauteil angeordnet ist.

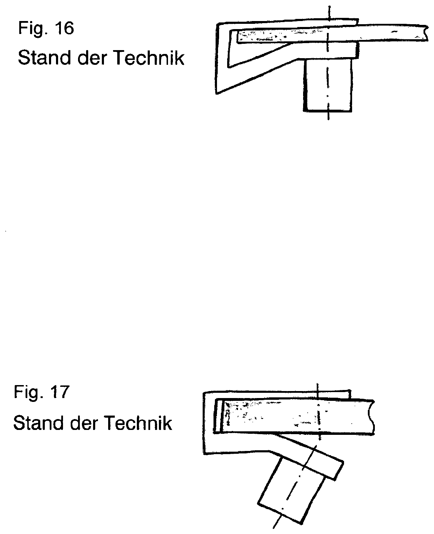

Nachteilig an den beschriebenen Anordnungen des Standes der Technik ist die Tatsache, dass Probleme entstehen, wenn Bauteile verschiedener Dicke mit derselben Clipmutter bestückt werden sollen. In den Figuren 16 und 17 ist diese Problematik skizziert. In Figur 16 ist die Clipmutter 110 auf ein vergleichsweise dünnes Bauteil 132 aufgeschnappt, so dass die Halteeinrichtungen 114, 116 gut am Bauteil 132 zur Anlage kommen. Insbesondere liegt das untere Halteelement 116 in dem Bereich an dem Bauteil 132 an, an dem die Mutter 128 auf der dem Bauteil 132 abgewandten Seite der Halteeinrichtung 116 angeordnet ist. Eine in die Mutter 128 eingedrehte Schraube kann somit die Mutter 128, das Bauteil 132 und die Halteeinrichtung 114, 116 im Bereich der dafür vorgesehenen Öffnungen durchdringen. In Figur 17 ist die Situation eine andere. Hier ist ein vergleichsweise dickes Bauteil 132' in den Clip 110 eingeführt. Man erkennt, dass der äußere Bereich der Halteeinrichtung 116 nicht, wie es sein sollte, mit dem Bauteil in Berührung tritt und dass ferner die Achse der Mutter 128 von einer Achse, die durch eine Öffnung im Bauteil 132' definiert ist, abweicht. Die in den Figuren 16 und 17 gezeigte Clipmutter 110 des Standes der Technik eignet sich insofern nur für dünnere Bleche, wie etwa das Blech 132 gemäß Figur 16.

Die DE 102 07 253 C1 beschreibt eine Clipsmutter-Verliersicherung mit einer U-förmigen Clipsmutter mit zwei (Feder-)Schenkeln und einem Verbindungselement dazwischen. Der Gegenstand, der durch die Clipsmutter gesichert werden soll, weist eine keilförmige Ausgestaltung auf, die zu ihrem freien Ende hin zunimmt. Durch diese Ausgestaltung ist es möglich, dass die Federschenkel flächig, jedoch nicht parallel am Gegenstand anliegen.

Die EP 1 903 219 A2 bezieht sich auf eine Befestigungsvorrichtung, das einen Gewindeblock, bspw. eine Vierkantstahlprofil mit mindestens 2 Gewindebohrungen aufweist. Ein Halteblech ist mit gewissem Spiel am Gewindeblock befestigt und weist einen Unterlegabschnitt auf, dessen Bohrungen mit denen im Gewindeblock fluchten. In einen Zwischenraum zwischen Haltebleck und Gewindeblock können Gegenstände eingeschoben und mittels Schraube gesichert werden.

Die DE 102 41 656 A1 und die EP 1 305 142 B1 beschreiben jeweils Halteclips, deren beide Arme das Bauteil, auf das der Clip aufgesteckt wird, kontaktieren.

Aus der DE 10 2009 024 531 A1 ist eine Clipmutter bekannt, deren Mutter an einem ersten Arm eines Clips befestigt ist und dabei durch das Bauteil hindurchragt, auf das der Clip aufgesteckt ist. Die Mutter kontaktiert dabei den gegenüberliegenden zweiten Arm des Clips. Das Bauteil wird von den Armen des Clips kontaktiert.

Eine weitere Clipmutter ist aus der DE 696 20 475 T2 bekannt.

Der Erfindung liegt die Aufgabe zugrunde, die geschilderten Nachteile des Standes der Technik auszuräumen und insbesondere eine Clipmutter zur Verfügung zu stellen, die ohne Weiteres auf Bauteile mit unterschiedlichen Dicken aufgeschnappt werden kann, um dann, wie vorgesehen, das Eindrehen einer Schraube zu ermöglichen.

Diese Aufgabe wird mit den Merkmalen des unabhängigen Anspruchs gelöst, vorteilhafte Ausführungsformen der Erfindung sind in den abhängigen Ansprüchen angegeben.

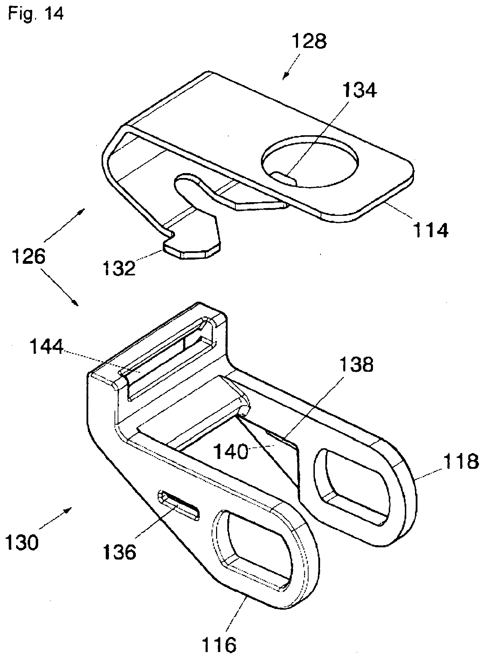

Die Erfindung baut auf der gattungsgemäßen Clipmutter dadurch auf, dass an der Mutter eine der ersten Halteeinrichtung zugewandte Dichtung vorgesehen ist und dass ein Bauteil, an dem die Clipmutter befestigt werden soll, die erste Halteeinrichtung und die Dichtung direkt kontaktiert, weil durch Drehung der Mutter die Kontaktfläche der ersten Halteeinrichtung und die Dichtung als Kontaktfläche der Mutter parallel ausgerichtet werden. Durch die Verschwenkbarkeit der Mutter um die y-Achse kann diese so ausgerichtet werden, dass eine in die Mutter eingedrehte Schraube ein von der Schraube zu durchdringendes Loch trifft und dieses ohne Weiteres durchdringt. Die Probleme des Standes der Technik, welche durch die nicht zusammenfallenden Achsen von Mutter und Durchgangsloch im Bauteil entstehen (vergleiche Figur 14) sind damit ausgeräumt. Durch die an der Mutter vorgesehene Dichtung können die durch die verschiedenen Seiten des Bauteils definierten Bereiche beziehungsweise Räume gegeneinander abgedichtet werden, so dass keine Flüssigkeiten oder Gase vom einen Bereich in den anderen übertreten können. Eine elastisch oder plastisch verformbare Dichtung ist ferner in der Lage, Bauteiltoleranzen auszugleichen. Die Dichtung kann durch einen mit dem Muttergehäuse verprägten O-Ring realisiert sein. Ebenfalls können beispielsweise kreisförmige oder rechteckige aufgespritzte, aufgeklebte oder anvulkanisierte Elastomerkomponenten als Dichtung vorgesehen werden. Durch den Kontakt der verschwenkbaren Mutter mit dem Bodenteil ist es nicht erforderlich, die zweite Halteeinrichtung verschwenkbar zu gestalten, um so die Verschwenkbarkeit der Mutter zu realisieren. Vielmehr kann die zweite Halteeinrichtung wie gemäß dem Stand der Technik schlicht aufgrund der elastischen Eigenschaften des Clips relativ zur ersten Halteeinrichtung bewegbar sein, während die Verschwenkung um die y-Achse nur die Mutter selbst betrifft.

Gemäß einer bevorzugten Ausführungsform ist vorgesehen, dass die zweite Halteeinrichtung zwei sich in der xz-Ebene erstreckende flächige Haltearme aufweist, wobei die Mutter zwischen den Haltearmen von diesen gehalten wird. Durch die Erstreckung der Haltearme in die xz-Ebene ist eine Rotation beziehungsweise Verschwenkung der Mutter nur um die y-Achse möglich, also in der erwünschten Art und Weise.

Dies kann dadurch realisiert sein, dass die Haltearme Öffnungen oder Ausnehmungen aufweisen, in welchen Fortsätze der Mutter gelagert sind. Alternativ kann die Mutter mittels Kugeln oder über Stifte im Clip gelagert werden.

Gemäß einer weiteren Ausführungsform der Erfindung ist diese dadurch weitergebildet, dass die zweite Halteeinrichtung einen Haltearm aufweist, der für die Mutter eine Gleitführung zur Verfügung stellt. Hierdurch kann die Clipmutter insgesamt schmal bauen, da keine seitlichen Fortsätze an der Mutter vorzusehen sind.

Es ist besonders nützlich, dass die Verschwenkbarkeit der Mutter in mindestens eine Richtung begrenzt ist. Dadurch, dass ein übermäßiges Verdrehen der Mutter im Clip verhindert wird, ist es entbehrlich, die Mutter vor Montage der Clipmutter zunächst in Position zu bringen. Die Rotationsbegrenzung ermöglicht somit das ergonomische und prozesssichere Fügen der Clipmutter mit dem Blech.

Insbesondere kann vorgesehen sein, dass die Verschwenkbarkeit der Mutter durch einen der ersten Halteeinrichtung zugewandten auskragenden Rand der Mutter begrenzt ist, der in einem maximal verschwenkten Zustand der Mutter an der zweiten Halteeinrichtung anstößt.

Ebenfalls kann es nützlich sein, dass die Verschwenkbarkeit der Mutter durch einen an der Mutter angebrachten Zapfen begrenzt ist, der in einem maximal verschwenkten Zustand an der zweiten Halteeinrichtung anstößt.

Im Zusammenhang mit der Ausführung, die eine Gleitführung zur Verfügung stellt, kann nützlicherweise vorgesehen sein, dass die Verschwenkbarkeit der Mutter durch einen an der einen an der Halteeinrichtung angebrachten Zapfen begrenzt ist, der in einem maximal verschwenkten Zustand an einer Begrenzung eines Langloches in einer Außenkontur der Mutter anstößt.

Es ist von Vorteil, dass die Mutter eine der ersten Halteeinrichtung zugewandte, sich in axiale Richtung erstreckende Einführhilfe aufweist. Diese Einführhilfe kann beispielsweise in Form eines Doms auf dem Mutterkörper ausgebildet sein, über den das Bauteil beim Einführen in die Clipmutter gleitet.

Gemäß den bevorzugten Ausführungsformen ist vorgesehen, dass die Mutter einen Gewindeeinsatz oder eine Kegelmutter umfasst.

Bei einer weiteren besonders bevorzugten Ausführungsform der Erfindung ist vorgesehen, dass der Clip aus mindestens einem ersten und einem zweiten Clipelement besteht, wobei die Clipelemente miteinander verbindbar und voneinander trennbar sind. Auf dieser Grundlage ist man bezüglich der Materialeigenschaften der verschiedenen Abschnitte des Clips frei, so dass die verschiedenen Abschnitte des Clips im Hinblick auf ihre unterschiedlichen Aufgaben optimiert werden können.

In diesem Zusammenhang ist es besonders vorteilhaft, dass ein erstes Clipelement aus Blech und ein zweites Clipelement aus Kunststoff besteht.

Es ist von besonderem Vorteil, dass das erste Clipelement die erste Halteeinrichtung und das zweite Clipelement die zweite Halteeinrichtung umfasst. Letztlich kann so die erste Halteeinrichtung als eine Art Blattfeder ausgelegt werden, wodurch es grundsätzlich möglich ist, eine höhere Spannkraft aufzubringen als mit elastischen Kunststoffteilen. Für die zweite Halteeinrichtung ist jedoch Kunststoff ein vollkommen geeigneter Werkstoff. Kunststoff kann in exakter Geometire verarbeitet werden, was für eine exakte Aufnahme der Mutter in den Clip erforderlich ist. Ebenfalls hat Kunststoff eine gute Beweglichkeit für die Aufnahme der Mutter beim Einsetzen dieser in den Clip. Neben der Erhöhung der Spannkraft gegenüber einer ersten Halteeinrichtung aus Kunststoff wird durch die Wahl von Blech als Werkstoff für die erste Halteeinrichtung auch der Wertebereich für die verschiedenen Blechdicken erweitert, für die sich die Clipmutter eignet. Es wird eine hohe Spannkraft auf dünne Bleche aufgebracht, und es ist gleichzeitig möglich, dickere Bleche aufgrund der verbesserten Beweglichkeit in Verbindung mit ein und derselben Clipmutter zu verwenden.

Weiterhin kann vorgesehen sein, dass das erste Clipelement zwei elastisch verformbare Rastnasen und das zweite Clipelement zwei Öffnungen zur Aufnahme der Rastnasen umfasst. Hierdurch wird eine sichere Verbindung der Clipelemente zur Ausbildung des gesamten Clips zur Verfügung gestellt.

In diesem Zusammenhang kann vorgesehen sein, dass das zweite Clipelement zwei Aussparungen als Einführhilfen für die Rastnasen umfasst. Durch die Anwesenheit von Ausnehmungen reicht für die Rastnasen eine verringerte Elastizität aus.

Die Erfindung wird nun mit Bezug auf die begleitenden Zeichnungen anhand besonders bevorzugter Ausführungsformen beispielhaft erläutert.

Es zeigen:
- Figur 1: eine perspektivische Explosionsdarstellung einer erfindungsgemäßen Clipmutter sowie eines Bauteils;
- Figur 2: eine perspektivische Darstellung einer erfindungsgemäßen Clipmutter;
- Figur 3: eine Seitenansicht einer erfindungsgemäßen Clipmutter;
- Figur 4: eine perspektivische Darstellung einer Mutter;
- Figur 5: eine Seitenansicht einer erfindungsgemäßen Clipmutter mit eingeführtem dünnem Bauteil;
- Figur 6: eine erfindungsgemäße Seitenansicht einer erfindungsgemäßen Clipmutter mit eingeführtem dickem Bauteil;
- Figur 7: eine Detailansicht einer erfindungsgemäßen Clipmutter mit maximal nach links verschwenkter Mutter;
- Figur 8: eine Detailansicht einer erfindungsgemäßen Clipmutter mit maximal nach rechts verschwenkter Mutter;
- Figur 9: verschiedene Ausführungsformen von erfindungsgemäßen Clipmuttern;
- Figur 10: zwei Ansichten einer erfindungsgemäßen Clipmutter;
- Figur 11: zwei Ansichten einer erfindungsgemäßen Clipmutter;
- Figur 12: eine erfindungsgemäße Clipmutter in einem Zustand, in dem gerade ein Bauteil eingeführt wird;
- Figur 13: eine perspektivische Darstellung einer weiteren Ausführungsform eines Clips für eine erfindungsgemäße Clipmutter;
- Figur 14: eine perspektivische Darstellung der Clipelemente des Clips gemäß Figur 13;
- Figur 15: eine weitere perspektivische Darstellung des Clips gemäß Figur 13;
- Figur 16: eine Skizze zum Stand der Technik; und
- Figur 17: eine weitere Skizze zum Stand der Technik.

Bei der Beschreibung der Zeichnungen bezeichnen gleiche Bezugszeichen gleiche oder vergleichbare Komponenten.

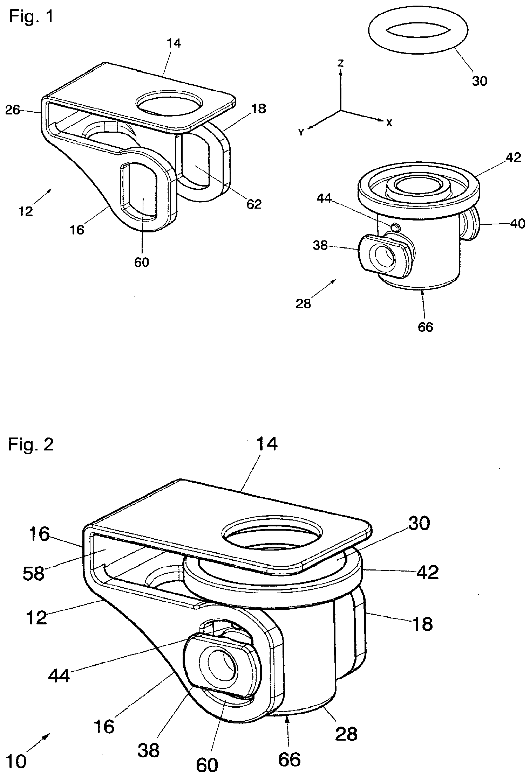

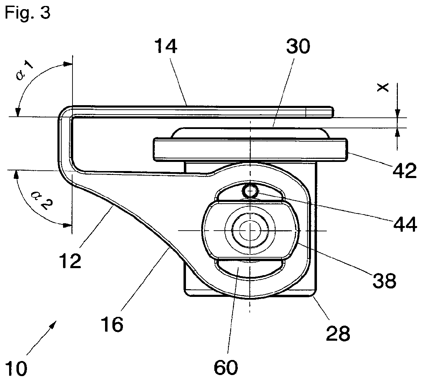

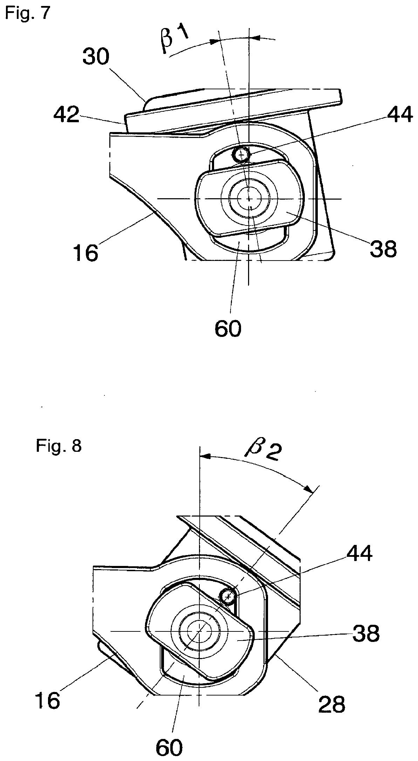

Figur 1 zeigt eine perspektivische Explosionsdarstellung einer erfindungsgemäßen Clipmutter 10 sowie eines Bauteils. Figur 2 zeigt eine perspektivische Darstellung einer erfindungsgemäßen Clipmutter 10. Figur 3 zeigt eine Seitenansicht einer erfindungsgemäßen Clipmutter 10. Das Koordinatensystem in Figur 1 dient der Veranschaulichung der oben und in den Ansprüchen angegebenen Koordinaten. Die Clipmutter 10 umfasst einen Clip 12, der vorzugsweise aus einem zähelastischen Kunststoff gefertigt ist. Hierdurch wird die erforderliche Elastizität beim Aufschnappen auf Bauteile unterschiedlicher Stärke gewährleistet. Bestandteile des Clips 12 sind eine erste Halteeinrichtung 14 und eine zweite Halteeinrichtung 16, 18, die in der vorliegenden Ausführungsform zwei flächige Haltearme 16, 18 mit darin vorgesehen Öffnungen 60, 62 umfasst. Die erste Halteeinrichtung 14 und die zweite Halteeinrichtung 16, 18 sind durch eine Verbindungseinrichtung 26 miteinander verbunden. Die erste Halteeinrichtung 14 ist plattenförmig. Die Mutter 28 besteht vorzugsweise aus einem hochfesten Kunststoff, um die Kräfte, die beim Anziehen einer Schraube entstehen, aufzunehmen. Ebenfalls kann die Mutter 28 aus Metall gefertigt sein. Die Mutter 28 hat zwei gegenüberliegende seitliche Fortsätze 38, 40 und einen auskragenden Rand 42. Ferner ist eine Dichtung 30 vorgesehen. Die Dichtung 30 dichtet die Bereiche auf den verschiedenen Seiten des Bauteils gegeneinander ab. Der Boden 66 der Mutter ist zu diesem Zweck geschlossen. Ein als Platte, insbesondere Blech, ausgebildetes Bauteil mit einer Öffnung, welche zum Durchführen einer in die Mutter 28 einzuschraubenden Schraube vorgesehen ist, wird zwischen die erste Halteeinrichtung 14 und die Haltearme 16, 18 geführt. Dabei passt sich der Clip 12 dem Blech an, in dem sich die Winkel α1 und α2 verändern. Der Clip ist so konstruiert, dass er mithilfe einer geringen Vorspannkraft am Blech seine Position hält. Die Klemmkraft wird durch den Widerstand, der bei der elastischen Verformung des Clips entsteht, erzeugt. Das Blech hat vorzugsweise seine Sollposition bezüglich der Clipmutter erreicht, wenn es an der Anschlagfläche 58 anliegt. In dem Zustand fluchtet dann die Öffnung im Blech mit der Achse der Mutter 28. Ferner weist die Mutter einen seitlich angebrachten Zapfen 44 auf, der der Begrenzung der Verschwenkung der Mutter 28 relativ zum Clip dient. Dies wird nachfolgend im Zusammenhang mit den Figuren 7 und 8 näher erläutert. Es ist ferner erwähnenswert, dass die erste Halteeinrichtung 14 in anderer Weise gestaltet sein kann. Insbesondere muss diese nicht plattenförmig ausgebildet sein, um ein Loch aufzuweisen, durch das eine Schraube hindurchtreten kann. Vielmehr ist es auch denkbar, dass die Halteeinrichtung nur als seitlicher Finger ausgebildet ist, so dass der Bereich um ein Loch in einer in die Clipmutter eingeführten Platte freiliegt. Bei einer derartigen Ausbildung kann beispielsweise eine Kontaktlasche zur Erdung des Bleches direkt auf das Blech aufgeschraubt werden.

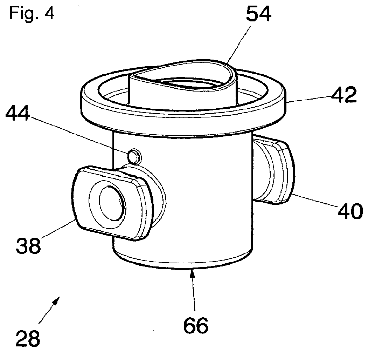

Figur 4 zeigt eine perspektivische Darstellung einer Mutter. Die Mutter 28 mit ihren seitlichen Fortsätzen 38, 40 und ihrem Rand 42 kann ferner mit einer sich in axiale Richtung erstreckenden Einführhilfe 54 ausgestattet sein. Diese kontaktiert das einzuführende Bauteil während des Einführvorgangs und es bestimmt die Relativposition von Clipmutter und Bauteil mit, indem es in die Öffnung eines eingeführten Bauteils eindringt, so lange noch keine Schraube von oben in die Mutter eingedreht ist.

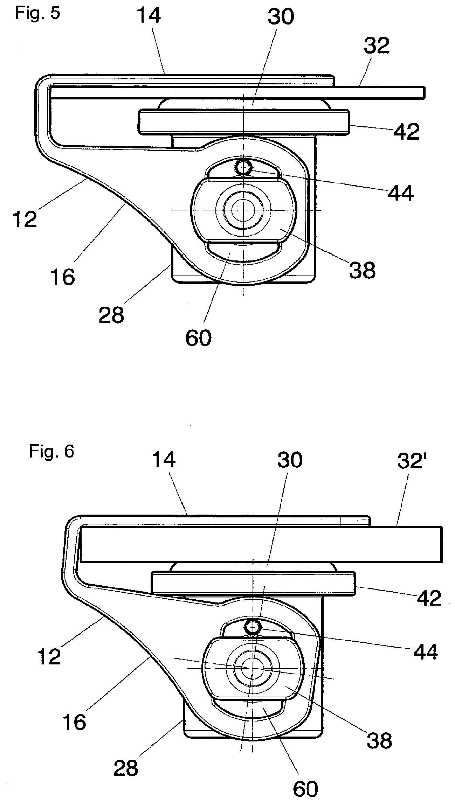

Figur 5 zeigt eine Seitenansicht einer erfindungsgemäßen Clipmutter mit eingeführtem dünnem Bauteil. Figur 6 zeigt eine erfindungsgemäße Seitenansicht einer erfindungsgemäßen Clipmutter mit eingeführtem dickem Bauteil. Unabhängig davon, ob ein dünnes Blech 32 oder ein dickes Blech 32' zwischen die erste Halteeinrichtung 14 und die zweite Halteeinrichtung 16, 18 geschoben wird, in jedem Fall fluchten die Anlageflächen auf beiden Seiten des Bleches 32, 32' mit dessen Oberflächen. Dies wird dadurch erreicht, dass beim Einschieben eines dicken Bleches 32' sich zwar die zweite Halteeinrichtung 16, 18, also die Haltearme 16, 18 nach unten relativ zu der ersten Halteeinrichtung 14 verbiegen, dass jedoch die Mutter 28 eine ausgleichende Verschwenkung zur Aufrechterhaltung beziehungsweise Erzeugung einer Parallelität der Anlageflächen durchführt.

Figur 7 zeigt eine Detailansicht einer erfindungsgemäßen Clipmutter mit maximal nach links verschwenkter Mutter. Figur 8 zeigt eine Detailansicht einer erfindungsgemäßen Clipmutter mit maximal nach rechts verschwenkter Mutter. Die Verschwenkung der Mutter 28 relativ zum Clip 14 wird in eine Richtung um den Winkel β1 begrenzt. Hier tritt der Rand 42 der Mutter in Formschluss mit der zweiten Halteeinrichtung 16, 18. In die andere Richtung wird die Verschwenkung durch den an der Mutter 28 angeordneten Zapfen um den Winkel β2 begrenzt, wenn der Zapfen an den Rändern der Öffnung 60 anschlägt. Eine gewisse Hemmung der Rotation findet zwar auch möglicherweise dadurch statt, dass der Rand 42 der Mutter bei der Verschwenkung gemäß Figur 8 an der ersten Halteeinrichtung 14 anschlägt. Diese Begrenzung ist jedoch nicht zwingend, da sich der Abstand zwischen der ersten Halteeinrichtung 14 und der zweiten Halteeinrichtung 16, 18 aufgrund der elastischen Verformbarkeit des Clips 12 verändern lässt.

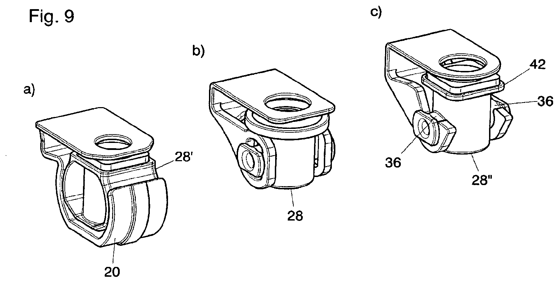

Figur 9 zeigt verschiedene Ausführungsformen von erfindungsgemäßen Clipmuttern. Figur 9a zeigt eine Clipmutter mit einer zweiten Halteeinrichtung 20, die aus nur einem einzigen Haltearm 20 besteht. Dieser Haltearm 20 stellt für die Mutter 28' eine Gleitführung zur Verfügung, so dass auch hier die Verschwenkbarkeit gewährleistet ist. Figur 9b zeigt die bereits im Zusammenhang mit den Figuren 1 bis 8 erläuterte Ausführungsform. Figur 9c zeigt eine Ausführungsform, die derjenigen gemäß Figur 9b sehr ähnlich ist. Allerdings sind die flächigen Haltearme nicht mit Öffnungen ausgestattet, sondern nur mit Ausnehmungen 36, so dass die Mutter 28" ohne Weiteres nach oben entnehmbar wäre. Ebenfalls ist der auskragende Rand 42 der Mutter 28" eckig ausgebildet. Jede der in Figur 9 gezeigten Muttern 28, 28', 28" kann wahlweise mit rundem oder eckigem Rand ausgebildet sein.

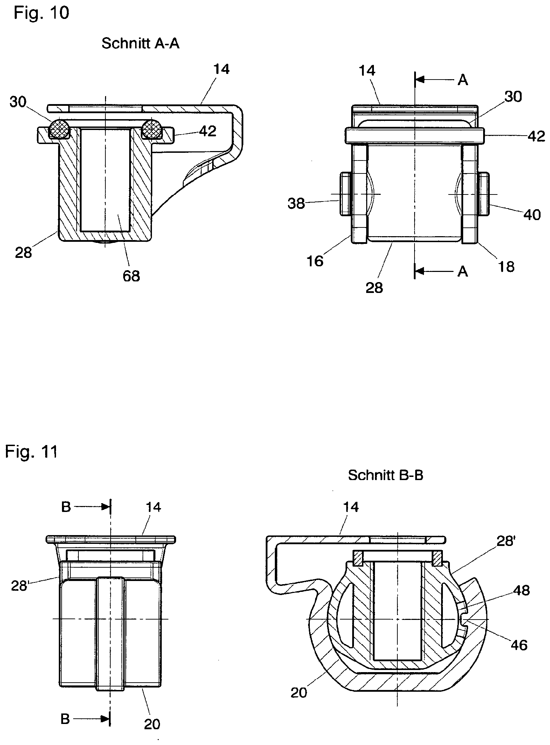

Figur 10 zeigt zwei Ansichten einer erfindungsgemäßen Clipmutter. Die Clipmutter entspricht derjenigen, die in Figur 9b dargestellt ist. Die rechte Ansicht zeigt die Clipmutter von vorne, das heißt der Blick richtet sich auf das offene Ende der Clipmutter. Die Linie AA definiert den Schnitt, der im linken Teil von Figur 10 erkennbar ist. In dem Schnitt ist zu erkennen, dass die Gewindebohrung 68 mit der Öffnung in der ersten Halteeinrichtung 14 fluchtet.

Figur 11 zeigt zwei Ansichten einer erfindungsgemäßen Clipmutter. Die Clipmutter entspricht derjenigen die in Figur 9a dargestellt ist. Die Linie BB kennzeichnet den Schnitt, der im rechten Teil von Figur 11 zu erkennen ist. Die Mutter 28' wird durch den Haltearm 20 mit Gleitführung geführt. Durch ein Langloch 48 in der Mutter 28' und einen Zapfen 46 an der Innenseite des Haltearms 20, der die Verschwenkung der Mutter 28' bei Anschlag an den Enden des Langloches 48 begrenzt, ist sowohl eine Verschwenkbegrenzung als auch eine Verliersicherung realisiert.

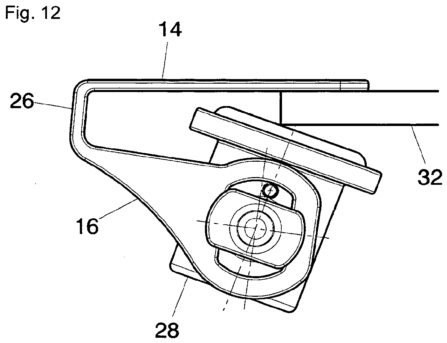

Figur 12 zeigt eine erfindungsgemäße Clipmutter in einem Zustand, in dem gerade ein Bauteil eingeführt wird. Hier ist ersichtlich, dass beim Einführen des Bleches 32 in die Clipmutter 10 zunächst eine Drehung der Mutter 28 nach außen, also zu den offenen Enden der Halteeinrichtungen 14, 16, 18 erfolgt. Das Blech 32 wird eingeführt und kontaktiert dann die Mutter 28 und/oder die Dichtung beziehungsweise die nicht dargestellte Einführhilfe und die erste Halteeinrichtung 14. Mit zunehmendem Einschieben des Bleches 32 vollzieht die Mutter 28 eine Drehung, bis die Anlagefläche, also die Kontaktfläche der ersten Halteeinrichtung 14, beide Oberflächen des Bleches 32 und die Dichtung als Kontaktfläche der Mutter 28, parallel sind. Das Blech kann dann bis zum Anschlag an der Innenseite der Verbindungseinrichtung 26 eingeschoben werden. Dann sollte eine Öffnung im Blech und die Achse der Mutter 28 fluchten.

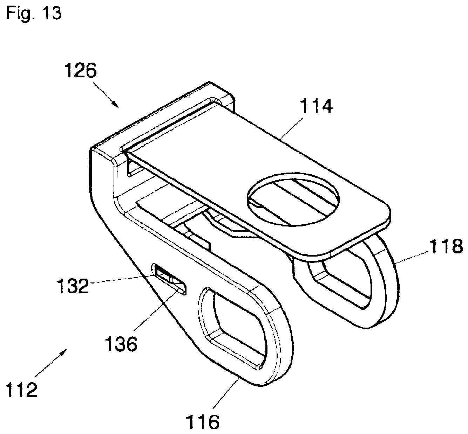

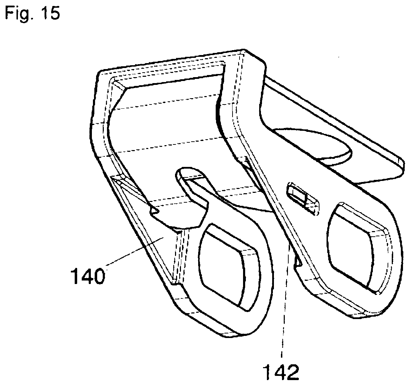

Figur 13 zeigt eine perspektivische Darstellung einer weiteren Ausführungsform eines Clips 112 für eine erfindungsgemäße Clipmutter. Figur 14 zeigt eine perspektivische Darstellung der Clipelemente 128, 130 des Clips 112 gemäß Figur 13. Figur 15 zeigt eine weitere perspektivische Darstellung des Clips 112 gemäß Figur 13. Der Clip 112 besteht aus einem ersten Clipelement 128 und einem zweiten Clipelement 130. Das erste Clipelement 128 umfasst die erste Halteeinrichtung 114, es besteht aus Blech und ist als Stanzteil gefertigt. Das zweite Clipelement 130 ist aus Kunststoff gefertigt, und es umfasst die Haltearme 116, 118 der zweiten Halteeinrichtung. Das zweite Clipelement 130 ist mit Öffnungen 136, 138 ausgestattet. Diese dienen der Aufnahme von Rastnasen 132, 134 des ersten Clipelementes 128. Als Einführhilfen für die Rastnasen 132, 134 ist das zweite Clipelement 130 mit Ausnehmungen 140, 142 ausgestattet. So lässt sich das erste Clipelement 128 einfach und sicher mit dem zweiten Clipelement 130 verbinden, indem die erste Halteeinrichtung 114 einfach durch den Schlitz 144 geschoben wird, bis die Rastnasen 132, 134 den Bereich der Ausnehmungen 140, 142 erreichen. Die Rastnasen 132, 134 müssen nun geringfügig elastisch nach innen verformt werden. Sodann kann das erste Clipelement 128 weiter mit dem zweiten Clipelement 130 zusammengeführt werden, bis schließlich die Rastnasen 132, 134 in die Ausnehmungen 136, 138 einrasten und dort sicheren Halt der Clipelemente 128, 130 aneinander gewähren. Die Verbindungseinrichtung 126 der Clipelemente 128, 130 ist im vorliegenden Fall durch das Zusammenspiel der vorstehend erwähnten Komponenten beider Clipelemente realisiert.

Bei allen Ausführungsformen der Erfindung ist es nicht erforderlich, dass sich das Verbindungselement senkrecht zur x-Achse erstreckt. Es kommt letztlich nur darauf an, dass die Halteeinrichtungen einen Abstand voneinander haben und dass die Achse der Mutter senkrecht auf einer Ebene stehen kann, die durch die erste Halteeinrichtung definiert ist, also auf der xy-Ebene.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Clipmutter
- 12: Clip
- 14: erste Halteeinrichtung
- 16: zweite Halteeinrichtung, Haltearm
- 18: zweite Halteeinrichtung, Haltearm
- 20: zweite Halteeinrichtung, Haltearm
- 22: zweite Halteeinrichtung, Haltearm
- 24: zweite Halteeinrichtung, Haltearm
- 26: Verbindungseinrichtung
- 28: Mutter
- 28': Mutter
- 28": Mutter
- 30: Dichtung
- 32: Blech
- 32': Blech
- 34: Öffnungen
- 38: Fortsatz
- 40: Fortsatz
- 42: Rand
- 44: Zapfen
- 46: Zapfen
- 48: Langloch
- 54: Einführhilfe
- 58: Anschlagfläche
- 60: Öffnung
- 62: Öffnung
- 66: Boden
- 112: Clip
- 114: erste Halteeinrichtung
- 116: zweite Halteeinrichtung, Haltearm
- 118: zweite Halteeinrichtung, Haltearm
- 126: Verbindungseinrichtung
- 128: erstes Clipelement
- 130: zweites Clipelement
- 132: Rastnase
- 134: Rastnase
- 136: Öffnung
- 138: Öffnung
- 140: Ausnehmung
- 142: Ausnehmung
- 144: Schlitz

## Patentansprüche

1. Clipmutter (10) mit
- einem Clip (12, 112), der eine erste Halteeinrichtung (14, 114), eine zweite Halteeinrichtung (16, 18, 20, 22, 24, 116, 118) und eine Verbindungseinrichtung (26, 126), die die erste Halteeinrichtung (14, 114) mit der zweiten Halteeinrichtung (16, 18, 20, 22, 24, 116, 118) verbindet, aufweist, wobei der Abstand der Halteeinrichtungen (14, 16, 18, 20, 22, 24, 114, 116, 118) zueinander variabel ist,
- wobei die Erstreckung der ersten Halteeinrichtung (14, 114) und der zweiten Halteeinrichtung (16, 18, 20, 22, 24, 116, 118) im Wesentlichen eine x-Achse definieren und die Erstreckung der Verbindungseinrichtung (26, 126) im Wesentlichen eine z-Achse definiert und wobei eine y-Achse senkrecht auf der x- und der z-Achse steht, und
- einer Mutter (28), die an der zweiten Halteeinrichtung (16, 18, 20, 22, 24, 116, 118) so angeordnet ist, dass eine Achse der Mutter (28, 28') parallel zur z-Achse und/oder senkrecht zur x-Achse ausrichtbar ist,
- wobei die Achse der Mutter (28, 28') aus ihrer Lage parallel zur z-Achse und/oder senkrecht zur x-Achse um die y-Achse in einer xz-Ebene unter Aufgabe ihrer Parallelität zur z-Achse und/oder ihrer senkrechten Lage zur x-Achse verschwenkbar ist,
**dadurch gekennzeichnet, dass** an der Mutter (28) eine der ersten Halteeinrichtung (14, 114) zugewandte Dichtung (30) vorgesehen ist und dass beim Einschieben eines Bauteils (32), an dem die Clipmutter (10) befestigt werden soll, die Kontaktfläche der ersten Halteeinrichtung (14, 114) und die Dichtung (30) als Kontaktfläche der Mutter (28) durch Drehung der Mutter (28) parallel ausgerichtet werden können und das Bauteil (32) direkt kontaktiert werden kann.

2. Clipmutter (10) nach einem der vorhergehenden Ansprüche, **dadurch gekennzeichnet, dass** die zweite Halteeinrichtung (16, 18, 20, 22, 24, 116, 118) zwei sich in der xz-Ebene erstreckende flächige Haltearme (16, 18, 20, 22, 24, 116, 118) aufweist, wobei die Mutter (28, 28') zwischen den Haltearmen (16, 18, 20, 22, 24, 116, 118) von diesen gehalten wird.

3. Clipmutter (10) nach einem der vorhergehenden Ansprüche, **dadurch gekennzeichnet, dass** die Haltearme (16, 18, 20, 22, 24, 116, 118) Öffnungen (34) oder Ausnehmungen (36) aufweisen, in welchen Fortsätze (38, 40) der Mutter (28, 28') gelagert sind.

4. Clipmutter (10) nach Anspruch 1, **dadurch gekennzeichnet, dass** die zweite Halteeinrichtung (20) einen Haltearm (20) aufweist, der für die Mutter eine Gleitführung zur Verfügung stellt.

5. Clipmutter (10) nach einem der vorhergehenden Ansprüche, **dadurch gekennzeichnet, dass** die Verschwenkbarkeit der Mutter (28, 28') in mindestens eine Richtung begrenzt ist.

6. Clipmutter (10) nach Anspruch 5, **dadurch gekennzeichnet, dass** die Verschwenkbarkeit der Mutter (28, 28') durch einen der ersten Halteeinrichtung (14, 114) zugewandten auskragenden Rand (42) der Mutter (28) begrenzt ist, der in einem maximal verschwenkten Zustand der Mutter an der zweiten Halteeinrichtung (16, 18, 20, 22, 24, 116, 118) anstößt.

7. Clipmutter (10) nach Anspruch 5 oder 6, **dadurch gekennzeichnet, dass** die Verschwenkbarkeit der Mutter (28) durch einen an der Mutter (28) angebrachten Zapfen (44) begrenzt ist, der in einem maximal verschwenkten Zustand an der zweiten Halteeinrichtung (16, 18, 20, 22, 24, 116, 118) anstößt.

8. Clipmutter (10) nach Anspruch 5, **dadurch gekennzeichnet, dass** die Verschwenkbarkeit der Mutter durch einen an der einen Halteeinrichtung (20) angebrachten Zapfen (46) begrenzt ist, der in einem maximal verschwenkten Zustand an einer Begrenzung eines Langloches (48) in einer Außenkontur der Mutter (28') anstößt.

9. Clipmutter (10) nach einem der vorhergehenden Ansprüche, **dadurch gekennzeichnet, dass** die Mutter (28, 28') eine der ersten Halteeinrichtung (14, 114) zugewandte, sich in axiale Richtung erstreckende Einführhilfe (54) aufweist.

10. Clipmutter (10) nach einem der vorhergehenden Ansprüche, **dadurch gekennzeichnet, dass** die Mutter einen Gewindeeinsatz oder eine Kegelmutter umfasst.

11. Clipmutter (10) nach einem der vorhergehenden Ansprüche, **dadurch gekennzeichnet, dass** der Clip (12, 112) aus mindestens einem ersten und einem zweiten Clipelement (128, 130) besteht, wobei die Clipelemente (128, 130) miteinander verbindbar und voneinander trennbar sind.

12. Clipmutter (10) nach Anspruch 11, **dadurch gekennzeichnet, dass** ein erstes Clipelement (128) aus Blech und ein zweites Clipelement (130) aus Kunststoff besteht.

13. Clipmutter (10) nach Anspruch 11 oder 12, **dadurch gekennzeichnet, dass** das erste Clipelement (128) die erste Halteeinrichtung (114) und das zweite Clipelement (130) die zweite Halteeinrichtung (116, 118) umfasst.

14. Clipmutter (10) nach einem der Ansprüche 11 bis 13, **dadurch gekennzeichnet, dass** das erste Clipelement (128) zwei elastisch verformbare Rastnasen (132, 134) und das zweite Clipelement (130) zwei Öffnungen (136, 138) zur Aufnahme der Rastnasen (132, 134) umfasst.

15. Clipmutter (10) nach Anspruch 14, **dadurch gekennzeichnet, dass** das zweite Clipelement (130) zwei Aussparungen (140, 142) als Einführhilfen für die Rastnasen (132, 134) umfasst.

## Claims

1. A clip nut (10) comprising
- a clip (12, 112) which has a first retaining device (14, 114), a second retaining device (16, 18, 20, 22, 24, 116, 118) and a connecting device (26, 126) which connects the first retaining device (14, 114) to the second retaining device (16, 18, 20, 22, 24, 116, 118), wherein the distance between the retaining devices (14, 16, 18, 20, 22, 24, 114, 116, 118) is variable,
- wherein the extent of the first retaining device (14, 114) and the second retaining device (16, 18, 20, 22, 24, 116, 118) substantially define an x-axis and the extent of the connecting device (26, 126) substantially defines a z-axis and wherein a y-axis is located perpendicular to the x-axis and the z-axis, and
- a nut (28) which is arranged on the second retaining device (16, 18, 20, 22, 24, 116, 118) such that an axis of the nut (28, 28') is able to be aligned parallel to the z-axis and/or perpendicular to the x-axis,
- wherein the axis of the nut (28, 28') is pivotable from its position parallel to the z-axis and/or perpendicular to the x-axis about the y-axis in a xz-plane by surrendering its parallelism relative to the z-axis and/or its perpendicular position relative to the x-axis,
**characterised in that** a seal (30) facing the first retaining device (14, 114) is provided on the nut (28) and **in that** when inserting a component (32), to which the clip nut (10) is intended to be fastened, the contact surface of the first retaining device (14, 114) and the seal (30), as a contact surface of the nut (28), may be aligned parallel to one another by rotating the nut (28) and the component (32) may be brought into direct contact therewith.

2. The clip nut (10) according to one of the preceding claims, **characterised in that** the second retaining device (16, 18, 20, 22, 24, 116, 118) has two flat retaining arms (16, 18, 20, 22, 24, 116, 118) extending in the xz-plane, wherein the nut (28, 28') is retained between the retaining arms (16, 18, 20, 22, 24, 116, 118) and by said retaining arms.

3. The clip nut (10) according to one of the preceding claims, **characterised in that** the retaining arms (16, 18, 20, 22, 24, 116, 118) have openings (34) or recesses (36), projections (38, 40) of the nut (28, 28') being mounted therein.

4. The clip nut (10) according to Claim 1, **characterised in that** the second retaining device (20) has a retaining arm (20) which provides a sliding guide for the nut.

5. The clip nut (10) according to one of the preceding claims, **characterised in that** the pivotability of the nut (28, 28') is limited in at least one direction.

6. The clip nut (10) according to Claim 5, **characterised in that** the pivotability of the nut (28, 28') is limited by a projecting edge (42) of the nut (28) facing the first retaining device (14, 114), said edge abutting against the second retaining device (16, 18, 20, 22, 24, 116, 118) in a maximum pivoted state of the nut.

7. The clip nut (10) according to Claim 5 or 6, **characterised in that** the pivotability of the nut (28) is limited by a pin (44) attached to the nut (28), said pin abutting against the second retaining device (16, 18, 20, 22, 24, 116, 118) in a maximum pivoted state.

8. The clip nut (10) according to Claim 5, **characterised in that** the pivotability of the nut is limited by a pin (46) attached to the retaining device (20), said pin abutting against a limit stop of a slot (48) in an outer contour of the nut (28') in a maximum pivoted state.

9. The clip nut (10) according to one of the preceding claims, **characterised in that** the nut (28, 28') has an insertion aid (54) facing the first retaining device (14, 114) and extending in the axial direction.

10. The clip nut (10) according to one of the preceding claims, **characterised in that** the nut comprises a threaded insert or a taper nut.

11. The clip nut (10) according to one of the preceding claims, **characterised in that** the clip (12, 112) consists of at least one first and one second clip element (128, 130), wherein the clip elements (128, 130) are able to be connected together and separated from one another.

12. The clip nut (10) according to Claim 11, **characterised in that** a first clip element (128) consists of sheet metal and a second clip element (130) consists of plastics material.

13. The clip nut (10) according to Claim 11 or 12, **characterised in that** the first clip element (128) comprises the first retaining device (114) and the second clip element (130) comprises the second retaining device (116, 118).

14. The clip nut (10) according to one of Claims 11 to 13, **characterised in that** the first clip element (128) comprises two elastically deformable latching lugs (132, 134) and the second clip element (130) comprises two openings (136, 138) for receiving the latching lugs (132, 134).

15. The clip nut (10) according to Claim 14, **characterised in that** the second clip element (130) comprises two recesses (140, 142) as insertion aids for the latching lugs (132, 134).

## Revendications

1. Ecrou clips (10) avec
- une pince (12, 112) qui comporte un premier dispositif de retenue (14, 114), un deuxième dispositif de retenue (16, 18, 20, 22, 24, 116, 118) et un dispositif de liaison (26, 126), qui relie le premier dispositif de retenue (14, 114) au deuxième dispositif de retenue (16, 18, 20, 22, 24, 116, 118), sachant que l'intervalle entre les dispositifs de retenue (14, 16, 18, 20, 22, 24, 114, 116, 118) est variable l'un par rapport à l'autre,
- sachant que l'extension du premier dispositif de retenue (14, 114) et du deuxième dispositif de retenue (16, 18, 20, 22, 24, 116, 118) définissent pour l'essentiel un axe x et l'extension du dispositif de liaison (26, 126) définit pour l'essentiel un axe z et sachant qu'un axe y est perpendiculaire à l'axe x et à l'axe z, et
- un écrou (28), qui est disposé sur le deuxième dispositif de retenue (16, 18, 20, 22, 24 116, 118) de telle sorte qu'un axe de l'écrou (28, 28') peut être orienté parallèle à l'axe z et/ou perpendiculaire à l'axe x,
- sachant que l'axe de l'écrou (28, 28') peut être pivoté de sa position parallèle à l'axe z et/ou perpendiculaire à l'axe x autour de l'axe y dans un plan xz interrompant ainsi son parallélisme à l'axe z et/ou sa position perpendiculaire à l'axe x,
**caractérisé en ce que** un joint d'étanchéité (30) tourné vers le premier dispositif de retenue (14, 114) est prévu sur l'écrou (28) et **en ce qu'**en, faisant glisser un composant (32) sur lequel l'écrou clips (10) doit être fixé, la surface de contact du premier dispositif de retenue (14, 114) et le joint d'étanchéité (30) en tant que surface de contact de l'écrou (28) peuvent être orientés parallèles par rotation de l'écrou (28) et le composant (32) peut être directement mis en contact.

2. Ecrou clips (10) selon l'une quelconque des revendications précédentes, **caractérisé en ce que** le deuxième dispositif de retenue (16, 18, 20, 22, 24, 116, 118) comporte deux bras de retenue plats (16, 18, 20, 22, 24, 116, 118) s'étendant dans le plan xz, sachant que l'écrou (28, 28') est maintenu entre les bras de retenue (16, 18, 20, 22, 24, 116, 118) par ceux-ci.

3. Ecrou clips (10) selon l'une quelconque des revendications précédentes, **caractérisé en ce que** les bras de retenue (16, 18, 20, 22, 24, 116, 118) comportent des ouvertures (34) ou des évidements (36) dans lesquels sont logées les prolongements (38, 40) de l'écrou (28, 28').

4. Ecrou clips (10) selon la revendication 1, **caractérisé en ce que** le deuxième dispositif de retenue (20) comporte un bras de retenue (20) qui met à disposition une glissière pour l'écrou.

5. Ecrou clips (10) selon l'une quelconque des revendications précédentes, **caractérisé en ce que** la capacité de pivotement de l'écrou (28, 28') est limitée dans au moins une direction.

6. Ecrou clips (10) selon la revendication 5, **caractérisé en ce que** la capacité de pivotement de l'écrou (28, 28') est limitée par un bord (42) de l'écrou (28) en saillie tourné vers le premier dispositif de retenue (14, 114), qui vient en butée sur le deuxième dispositif de retenue (16, 18, 20, 22, 24, 116, 118) dans un état de pivotement maximal.

7. Ecrou clips (10) selon la revendication 5 ou 6, **caractérisé en ce que** la capacité de pivotement de l'écrou (28) est limitée par un axe (44) disposé sur l'écrou (28), qui vient en butée sur le deuxième dispositif de retenue (16, 18, 20, 22, 24, 116, 118) dans un état de pivotement maximal.

8. Ecrou clips (10) selon la revendication 5, **caractérisé en ce que** la capacité de pivotement de l'écrou est limitée par un axe (46) disposé sur le dispositif de retenue (20), qui vient en butée sur une limitation d'un trou oblong (48) dans un contour extérieur de l'écrou (28') dans un état de pivotement maximal.

9. Ecrou clips (10) selon l'une quelconque des revendications précédentes, **caractérisé en ce que** l'écrou (28, 28') comporte une assistance d'introduction (54) tournée vers le premier dispositif de retenue (14, 114), s'étendant dans la direction axiale.

10. Ecrou clips (10) selon l'une quelconque des revendications précédentes, **caractérisé en ce que** l'écrou comprend un élément d'insertion fileté ou un écrou conique.

11. Ecrou clips (10) selon l'une quelconque des revendications précédentes, **caractérisé en ce que** la pince (12, 112) est composée dau moins un premier et d'un deuxième élément de pince (128, 130), sachant que les éléments de pince (128, 130) peuvent être reliés l'un avec l'autre et séparés l'un de l'autre.

12. Ecrou clips (10) selon la revendication 11, **caractérisé en ce qu'**un premier élément de pince (128) est composé de tôle et un deuxième élément de pince (130) est en matière plastique.

13. Ecrou clips (10) selon la revendication 11 ou 12, **caractérisé en ce que** le premier élément de pince (128) comprend le premier dispositif de retenue (114) et le deuxième élément de pince (130) comprend le deuxième dispositif de retenue (116, 118).

14. Ecrou clips (10) selon l'une quelconque des revendications 11 à 13, **caractérisé en ce que** le premier élément de pince (128) comprend deux becs d'encliquetage à déformation élastique (132, 134) et le deuxième élément de pince (130) comprend deux ouvertures (136, 138) pour recevoir les becs d'encliquetage (132, 134).

15. Ecrou clips (10) selon la revendication 14, **caractérisé en ce que** le deuxième élément de pince (130) comprend deux évidements (140, 142) en tant qu'assistance d'introduction pour les becs d'encliquetage (132, 134).
